# EUROPÄISCHE PATENTSCHRIFT

(11) **EP 3 241 426 B1**
(45) Veröffentlichungstag und Bekanntmachung des Hinweises auf die Patenterteilung: **12.12.2018**
(21) Anmeldenummer: 17159473.2
(22) Anmeldetag: 07.03.2017
(51) Int. Cl.: A01D 89/00, A01D 41/10

(54) **ERNTEMASCHINE MIT EINER ERNTEGUTAUFNAHMEVORRICHTUNG**
HARVESTING MACHINE WITH A CROP COLLECTION DEVICE
MOISSONNEUSE COMPRENANT UN RAMASSEUR

(30) Priorität: 03.05.2016 DE 102016108191
(43) Veröffentlichungstag der Anmeldung: 08.11.2017
(73) Patentinhaber: Usines Claas France S.A.S, 57140 St. Rémy / Woippy (FR)
(72) Erfinder: Cazaban-Mazerolles, Benoit, 57070 Chieulles (FR)
(74) Vertreter: Budach, Steffen

(56) Entgegenhaltungen:
- EP-A1- 2 674 023
- DE-U1-202010 002 458
- GB-A- 617 984
- GB-A- 2 124 876
- US-B1- 6 601 375

## Beschreibung

Die Erfindung betrifft eine Erntemaschine, insbesondere eine Ballenpresse oder einen Ladewagen, für landwirtschaftliches Erntegut gemäß dem Oberbegriff des Anspruchs 1.

Erntemaschinen wie landwirtschaftliche Ballenpressen oder Ladewagen dienen der Aufnahme und Weiterverarbeitung oder dem Transport von Erntegut, beispielsweise Halm- und/oder Blattgut in Form von Stroh, Heu oder Silage, welches auf einem Feld in Form eines Schwads abgelegt wurde. Zur Aufnahme des Erntegutes weist eine derartige Erntemaschine üblicherweise eine Aufnahmevorrichtung, eine sogenannte Pickup, auf, welche beispielsweise eine mit Zinken versehene rotierende Aufsammeltrommel umfasst. Bei einer Rotation der Aufsammeltrommel kann das auf dem Boden liegende, üblicherweise in einem Schwad abgelegte, Erntegut durch die Zinken vom Boden aufgenommen und beispielsweise zu einem nachgeordneten Förderrotor und/oder Erntegutkanal transportiert werden. Da die Aufnahmevorrichtung und die Aufsammeltrommel üblicherweise eine deutlich größere Breite als der ein daran anschließender Erntegutkanal und/oder darin angeordneter Förderrotor aufweisen, sind an den Aufnahmevorrichtungen oftmals parallel zu der Aufsammeltrommel angeordnete, drehbare Förderschnecken vorgesehen, welche ein Zusammenführen des aufgenommenen Erntegutes zur Mitte der Aufnahmevorrichtung hin bewirken. Besonders bei Erntemaschinen in Form von Ballenpressen ist eine möglichst gleichmäßige Verteilung des zusammengeführten Erntegutes von Interesse, da dies auch die Ballenbildung beeinflusst. Durch die Förderschnecken kann daher auch, insbesondere in einer Richtung quer zur Förderrichtung, eine gleichmäßigere Verteilung des Erntegutes vor einer Zuführung zu dem Förderrotor und/oder Erntegutkanal erreicht werden.

Aus der EP 0 401 542 A1 ist eine Aufnahmevorrichtung für eine Ballenpresse bekannt, welche einen sogenannten Niederhalter aufweist, welcher sich quer zur Fahrtrichtung erstreckt und als Rollenniederhalter ausgeführt ist. Oberhalb der Aufsammeltrommel ist dabei zwischen dem Rollenniederhalter und einer nachfolgenden Fördereinrichtung, eine weitere Leitrolle angeordnet, welche eine verbesserte Zuführung des Erntegutes zu der nachfolgenden Fördereinrichtung bewirken kann, wodurch eine gleichmäßigere und kontinuierliche Zuführung des Erntegut zu der Fördereinrichtung bewirkt werden kann. Mit zunehmender Breite der Aufnahmevorrichtung steigt auch die Menge des aufgenommenen Erntegutes an und es muss eine größere Menge an Erntegut mittig im Wesentlichen auf die Breite des Erntegutkanals zusammengeführt werden. Aufgrund der Menge des zusammenzuführenden Erntegutes kann es jedoch zu einer ungleichmäßigen Verteilung des Erntegutes kommen, wodurch die Qualität der Ballen einer Ballenpresse beeinträchtigt würde. Nachteilig ist zudem, dass durch das reine Zusammenführen des Erntegutes ungleichmäßig ausgebildete Schwade nur schwer kompensiert werden können, was die Qualität von daraus gepressten Ballen ebenfalls beeinträchtigt.

Aus der DE-U1-20 2010 002 458 ist eine Erntemaschine gemäß dem Oberbegriff des Anspruchs 1 bekannt.

Es ist daher eine Aufgabe der Erfindung, eine landwirtschaftliche Erntemaschine mit einer Aufnahmevorrichtung anzugeben, welche eine verbesserte Verteilung des Erntegutes vor einer Zuführung in den Erntegutkanal ermöglicht.

Die Aufgabe wird erfindungsgemäß durch die kennzeichnenden Merkmale des unabhängigen Patentanspruches 1 gelöst. Vorteilhafte Ausgestaltungen und Weiterbildungen der Erfindung sind in den Unteransprüchen und der Beschreibung angegeben.

Eine landwirtschaftliche Erntemaschine weist eine Aufnahmevorrichtung für landwirtschaftliches Erntegut auf, wobei die Aufnahmevorrichtung neben einer frontseitig angeordneten, antreibbaren Aufsammeltrommel zum Aufnehmen von Erntegut mindestens ein antreibbares Förderorgan zum Fördern von Erntegut zu einem Erntegutkanal, insbesondere einem Förderrotor in dem Erntegutkanal, aufweist, wobei das Förderorgan im Wesentlichen quer zu einer Längsachse der Erntemaschine angeordnet ist und zumindest das über die Breite der Aufnahmevorrichtung aufnehmbare Erntegut im Wesentlichen mittig zu dem Erntegutkanal zusammenführt. Gemäß der Erfindung ist zwischen der Aufsammeltrommel und dem Erntegutkanal mindestens eine erste Leitvorrichtung vorgesehen, durch welche zumindest ein Teil des Erntegutes im Wesentlichen quer zu der Längsachse und/oder in Richtung der Längsachse der Erntemaschine ablenkbar ist.

Die Fördereinrichtung kann dabei zumindest teilweise schräg, also unter einem Winkel zu der Längsachse der Erntemaschine, zu einer Förderrichtung des Erntegutes angeordnet sein, wodurch Erntegut, welches durch das Förderorgan zur Mitte der Aufnahmevorrichtung zu dem Erntegutkanal hin bewegt wird, durch die mindestens eine erste Leitvorrichtung zumindest teilweise in Richtung der Längsachse, insbesondere in den Erntegutkanal, abgelenkt werden kann. Zudem kann Erntegut, welches vor dem Erntegutkanal aufgenommen wird durch die mindestens erste Leitvorrichtung vor einem Eintritt in den Erntegutkanal mittig zusammengeführt werden. Die mindestens eine erste Leitvorrichtung kann dabei in einem Bereich vor dem Erntegutkanal und insbesondere vor einem Förderrotor angeordnet sein, wodurch besonderes in einem Bereich vor dem Erntegutkanal und insbesondere dessen Breite entsprechend, eine Verteilung des Erntegutes verbessert werden kann. Besonders bei der Aufnahme von größeren Mengen Erntegut, bei der Erntegut überwiegend von den Außenseiten zur Mitte geführt wird, kann so eine bessere Zusammenführung und/oder Verteilung des Erntegutes in dem Bereich unmittelbar vor dem Erntegutkanal erreicht werden. Dies hat den Vorteil, dass auch bei größeren Erntegutmengen, besonders bezogen auf die Breite des Erntegutkanals, eine gleichmäßigere Verteilung des Erntegutes bewirkt werden kann.

Die Leitvorrichtung ist zwischen einer Betriebsposition und einer Ruheposition verlagerbar. In einer Betriebsposition kann die Leitvorrichtung mit dem Erntegut in Kontakt gebracht werden, wodurch eine zumindest teilweise Ablenkung des Erntegutes seitliche oder in Längsrichtung ermöglicht werden kann. In einer Ruheposition kann die Leitvorrichtung außereingriff mit dem Erntegut gebracht werden, so dass der Erntegutstrom nicht durch die Leitvorrichtung beeinflußbar ist. Dies hat den Vorteil, dass die Leitvorrichtung je nach Erntebedingungen eingesetzt werden kann, so dass eine Verteilung des Erntegutes an unterschiedliche Gegebenheiten anpassbar ist. Besonders vorteilhaft ist dabei eine Verlagerung der Leitvorrichtung in Abhängigkeit von mindestens einem Betriebsparameter, insbesondere stufenweise oder stufenlos, einstellbar. Ein Betriebsparameter kann dabei eine Fahrgeschwindigkeit der Erntemaschine und/oder eine geometrische Form, insbesondere ein Querschnitt, des aufzunehmenden Schwads sein. So kann beispielsweise eine Breite, eine Höhe oder ein Querschnitt eines Schwads als Betriebsparameter dienen. Dies hat den Vorteil, dass eine zusätzliche Querverteilung des Erntegutes vor dem Erntegutkanal beispielsweise an einen schmalen oder breiten Schwad und die aufzunehmende Erntegutmenge angepaßt werden kann.

In einer besonders vorteilhaften Weiterbildung ist die mindestens eine Leitvorrichtung, insbesondere an einem Bodenelement, in einem Wirkbereich des Förderorgans angeordnet. Durch die Anordnung der mindestens einen Leitvorrichtung im Wirkbereich des Förderorgans ist das Erntegut durch das Förderorgan, insbesondere in dessen Betriebsposition, unmittelbar gegen die mindestens eine Leitvorrichtung förderbar, wodurch die Leitwirkung der Leitvorrichtung verbessert werden kann. Durch eine bodenseitig Anordnung der Leitvorrichtung unterhalb des Förderorgans ist eine zuverlässige Anströmung von Erntegut gewährleistet. Zudem ist durch die bodenseitige Anordnung der mindestens einen Leitvorrichtung eine Verlagerung zwischen der Betriebsposition und der Ruheposition technisch mit geringem Aufwand umsetzbar.

Vorteilhafterweise weist eine Leitvorrichtung mindestens zwei Leitelemente auf, welche beiderseits symmetrisch zur Längsachse der Erntemaschine angeordnet sind. Die mindestens zwei Leitelemente können zusammen und/oder einzeln verlagerbar ausgestaltet sein. Durch die symmetrische Anordnung der Leitelemente beiderseits der Längsachse kann eine gleichmäßige Zusammenführung des Erntegutes insbesondere in dem Bereich unmittelbar vor dem Erntegutkanal bewirkt werden.

In einer vorteilhaften Ausgestaltung der Erfindung weist die erste Leitvorrichtung mindestens zwei erste Leitelemente auf, welche im Wesentlichen randseitig vor dem Erntegutkanal angeordnet sind. Die ersten Leitelemente der ersten Leitvorrichtung sind dabei bezogen auf die Breite des Erntegutkanals jeweils vor dessen äußeren Rändern oder Seiten angeordnet. Die ersten Leitelemente können dabei erntegutkanalseitig einen geringeren Abstand zueinander aufweisen, als aufsammeltrommelseitig. Hierdurch kann Erntegut, welches frontseitig vor dem Erntegutkanal aufgenommen wurde, mittig weiter zusammengeführt werden, so dass zusammen mit dem durch das Förderorgan von den Seiten zugeführten Erntegut, insbesondere bei einem breiten Schwad, vor Eintritt in den Erntegutkanal eine gleichmäßigere Verteilung des Erntegutes über die Breite des Erntegutkanals ermöglicht werden kann.

In einer besonders vorteilhaften Ausgestaltung der Erfindung sind die ersten Leitelemente mindestens einer ersten Leitvorrichtung derart beabstandet zu einer Rückwand der Aufnahmevorrichtung angeordnet, dass zwischen den ersten Leitelementen und der Rückwand ein Spalt ausgebildet ist. Durch den Spalt kann ein Teilstrom des durch das Förderorgan geförderten Erntegutes zwischen den ersten Leitelementen und den Rückwänden zu dem Erntegutkanal gefördert werden. Hierdurch kann ein Teilstrom des Erntegutes zuverlässig randseitig in den Erntegutkanal geleitet werden, wodurch eine Verteilung des Erntegutes, insbesondere bei einem breiten Schwad, vor dem Erntegutkanal weiter verbessert werden kann.

Weiterhin ist in einer Ausgestaltung der Erfindung eine zweite Leitvorrichtung mit mindestens zwei zweiten Leitelementen vorgesehen, wobei die zweite Leitvorrichtung im Wesentlichen mittig der Aufnahmevorrichtung angeordnet ist und die zweiten Leitelemente v-förmig entgegen der Förderrichtung des Erntegutes angeordnet sind. Durch diese Ausgestaltung der zweiten Leitvorrichtung kann, insbesondere bei einem schmalen Schwad, mittig an der Aufnahmevorrichtung aufgenommenes Erntegut zumindest teilweise zu den Seiten oder Rändern des Erntegutkanals gefördert werden, so dass die Verteilung des Erntegutes vor einem Eintritt in den Erntegutkanal gleichmäßiger ausgebildet werden kann.

Gemäß einer weiteren vorteilhaften Ausgestaltung der Erfindung ist ein Leitelement mehrteilig ausgebildet. Ein Leitelement kann mehrteilig ausgebildet sein, wobei die einzelnen Leitelementteile gemeinsam und/oder separat verlagerbar ausgestaltet sein können. Hierdurch kann eine genauere Leitung des Erntegutes erfolgen, wodurch die Verteilung des Erntegutes vor einem Eintritt in den Erntegutkanal weiter verbessert werden kann.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung.

Es zeigen:
- Fig. 1: eine Ballenpresse in schematischer Seitenansicht mit einer Aufnahmevorrichtung gemäß der Erfindung;
- Fig. 2: eine detaillierte Darstellung der Aufnahmevorrichtung gemäß Fig. 1 in einer perspektivischen Ansicht mit einer ersten Leitvorrichtung in einer Betriebsposition;
- Fig. 3: eine perspektivische Ansicht der ersten Leitvorrichtung aus Fig. 2 in einer Ruheposition;
- Fig. 4: eine perspektivische Darstellung einer Aufnahmevorrichtung mit einer zweiten Leitvorrichtung in einer Betriebsposition; und

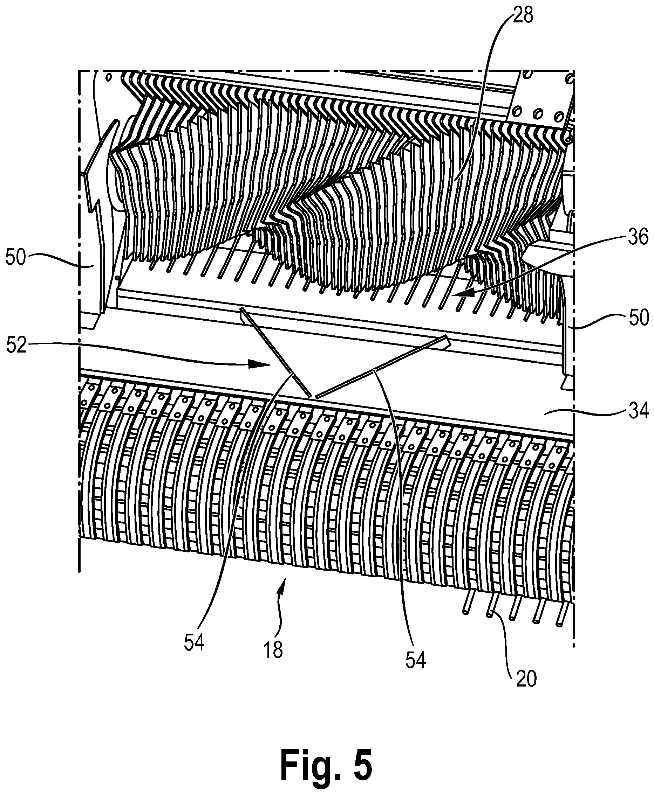

- Fig. 5: die Aufnahmevorrichtung aus Fig. 4 mit der zweiten Leitvorrichtung in einer Ruheposition.

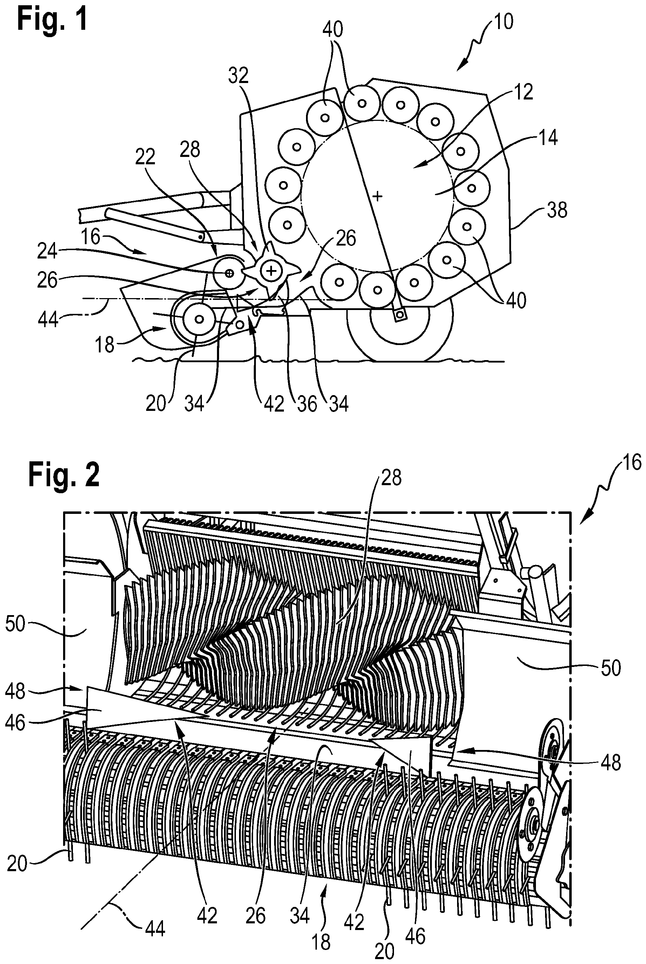

In Fig. 1 ist eine landwirtschaftliche Erntemaschine 10 in Form einer Ballenpresse in einer schematischen Seitenansicht dargestellt. Eine Erntemaschine 10 gemäß der Erfindung kann dabei in Form einer Ballenpresse für Rund- oder Quaderballen, eines Ladewagens oder einer selbstfahrenden Erntemaschine wie einem Feldhäcksler oder einem Mähdrescher ausgebildet sein. Erntemaschinen 10 in Form von Ballenpressen oder Ladewagen werden dabei üblicherweise durch ein Zugfahrzeug wie einen Traktor (nicht dargestellt) gezogen und über eine mit diesem koppelbare Antriebswelle zum Antrieb von Förder- und Verarbeitungseinrichtungen mit Energie versorgt. Die dargestellte Ballenpresse 10 nimmt im Erntebetrieb auf dem Feldboden liegendes Erntegut auf, beispielsweise in einem Schwad abgelegtes Stroh oder Gras, und verarbeitet dieses zu einem in einer Presskammer 12 gepressten Ballen 14, welcher nach seiner Fertigstellung heckseitig aus der Ballenpresse 10 ausgeworfen wird.

Das Erntegut wird hierbei von der Ballenpresse 10 mittels einer Aufnahmevorrichtung 16, einer sogenannten Pickup, welche frontseitig eine antreibbare Aufsammeltrommel 18 mit daran angeordneten Zinken 20 aufweist, vom Boden aufgenommen, um es den weiteren Förder- und Verarbeitungseinrichtungen der Ballenpresse 10 zuzuführen. Die Förderrichtung des Erntegutes von der Aufsammeltrommel 18 beispielsweise zu der Presskammer 12 entspricht dabei im Wesentlichen einer Längsrichtung der Erntemaschine 10. Nach der Aufnahme durch die Aufsammeltrommel 18 wird das Erntegut zunächst einem der Aufsammeltrommel 18 nachgeordneten Förderorgan 22 zugeführt. Das Förderorgan 22 erstreckt sich dabei, ebenso wie die Aufsammeltrommel 18, im Wesentlichen über eine gesamte Breite der Aufnahmevorrichtung 16.

Das teilweise spiralförmig ausgebildete Förderorgan 22 ist antreibbar um eine Drehachse 24 drehbar gelagert und kann das Erntegut von einer ursprünglichen Aufnahmebreite der Aufsammeltrommel 18 auf eine geringere Breite eines in Förderrichtung nachgelagerten Erntegutkanals 26 zusammenführen. Zudem kann das Förderorgan das Erntegut einem in Förderrichtung nachgelagerten Förderrotor 28 zuführen. Der Förderrotor 28 ist um eine Rotorachse 30 drehbar gelagert und weist eine Vielzahl von zueinander beabstandet angeordneten, sternförmigen Rotorelementen 32 auf, welche in den Erntegutkanal 26 hineinwirken, um das Erntegut beispielsweise zur Verdichtung in Richtung der Presskammer 12 zu fördern.

Unmittelbar an die Aufsammeltrommel 18 angrenzend ist ein Bodenelement 34 in Form eines Bleches angeordnet, welches sich ebenfalls unter dem Förderorgan 22 hindurch und bodenseitig entlang des Erntegutkanals 26 erstreckt. Das Bodenelement 34 kann dabei ein- oder mehrteilig ausgebildet sein. Unterhalb des Förderrotors 28 ist eine Schneidvorrichtung 36 angeordnet, welche eine Vielzahl von Schneidelementen aufweist, die zum Zerkleinern des Erntegutes durch das Bodenelement 34 zumindest teilweise in den Erntegutkanal 26 hineinschwenkbar ausgebildet sind. Die Schneidvorrichtung 36 ist dabei im Wesentlichen presskammerseitig des Förderrotors 28 angeordnet. Das zerkleinerte Erntegut wird anschließend der Presskammer 12 zugeführt, welche innerhalb eines Gehäuses 38 der Ballenpresse 10 durch kreisförmig angeordnete und antreibbare Presswalzen 40 ausgebildet ist.

Gemäß der Erfindung ist zwischen der Aufsammeltrommel 18 und dem Erntegutkanal 26 eine erste Leitvorrichtung 42 angeordnet, durch welche zumindest ein Teil des Erntegutes im Wesentlichen quer zu einer Längsachse 44 und/oder in Richtung der Längsachse 44 der Erntemaschine 10 ablenkbar ist. Die erste Leitvorrichtung 42 ist dabei im Wesentlichen unterhalb des Förderorgans 22 angeordnet und kann mit diesem zusammenwirken, beispielsweise durch Ablenken eines Teils des durch das Förderorgan geförderten Erntegutes, wodurch insbesondere in einem Bereich vor dem Erntegutkanal 26 eine gleichmäßigere Verteilung des Erntegutes erreicht werden kann. Um eine bessere Anpassung an unterschiedliche Betriebsbedingungen zu ermöglichen, kann die erste Leitvorrichtung 42 von einer Betriebsposition (Fig. 1), in der die Leitvorrichtung 42 zumindest teilweise in den Erntegutstrom hineinragt, in eine Ruheposition verlagert werden, in der der Erntegutstrom von der Leitvorrichtung 42 unbeeinflusst bleibt.

Die in Figur 2 dargestellte erste Leitvorrichtung 42 weist ein paar erste Leitelemente 46 auf, welche zum Ablenken des Erntegutes dienen, und die symmetrisch zu der Längsachse 44 unmittelbar vor dem Erntegutkanal 26 angeordnet sind. Die ersten Leitelemente 46 sind dabei, insbesondere innerhalb der Breite des Erntegutkanals 26, jeweils randseitig vor dem Erntegutkanal 26 angeordnet. Die ersten Leitelemente 46 sind dabei unter einem Winkel zur Längsachse 44 angeordnet, wobei die ersten Leitelemente 46 erntegutkanalseitig dichter aneinander angeordnet sind, als an ihren gegenüberliegenden Enden. Durch diese Anordnung unter einem Winkel kann ein Spalt 48 zwischen den ersten Leitelementen 46 und rückseitig angeordneten Rückwänden 50 der Aufnahmevorrichtung 16 ausgebildet werden. Durch den Spalt 48 kann an jeder Seite durch die ersten Leitelemente 46 Erntegut, welches seitlich durch das Förderorgan (zur besseren Ansicht der Leitvorrichtung nicht dargestellt) zur Mitte gefördert wird, zumindest teilweise in Richtung der Längsachse 44 abgelenkt und unmittelbar randseitig in den Erntegutkanal 26 eingeleitet werden. Weiterhin kann durch die ersten Leitelemente 46 Erntegut, welche im Wesentlichen vor dem Erntegutkanal 26 durch die Aufsammeltrommel 18 aufgenommen wird, zumindest teilweise in eine Richtung quer zur Längsachse 44 weiter zusammengeschoben werden, bevor das Erntegut in den Erntegutkanal 26 gelangt. Hierdurch kann, besonders bei einem hohen Erntegutaufkommen wie bei einem breiten Schwad, eine gleichmäßigere Verteilung des Erntegutes vor dem Erntegutkanal 26 über die Breite des Erntegutkanals 26 und/oder des Förderrotors 28 ermöglicht werden. Das Erntegut wird dann durch den in dem Erntegutkanal 26 angeordneten Förderrotor 28 über eine Schneidvorrichtung 36 weiter in Richtung der Presskammer 12 gefördert.

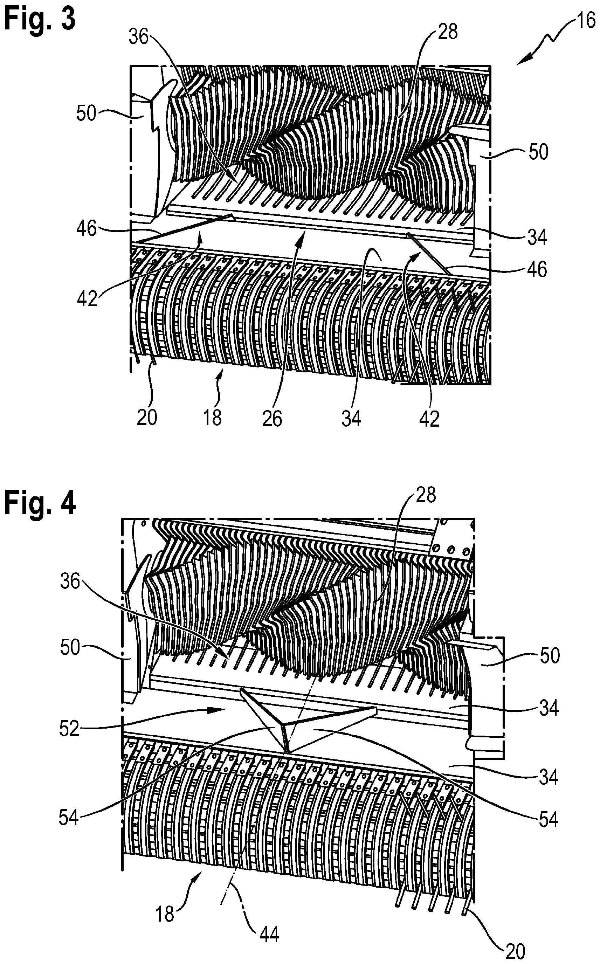

Die ersten Leitelemente 46 der ersten Leitvorrichtung 42 sind flächig, beispielsweise in Form von Blechen, ausgebildet. Die ersten Leitelemente 46 weisen benachbart zu dem Erntegutkanal 26 eine geringere Höhe auf, als an den zum Erntegut 26 beabstandeten Enden, insbesondere ein im Wesentlichen dreieckige Form. Eine dem Förderorgan und/oder dem Förderrotor 28 zugewandte Seite der Leitelemente 46 kann eine an die Konturen des Förderorgans und/oder des Förderrotors angepaßte Form aufweisen. Die ersten Leitelemente 46 sind durch das Bodenelement 34 hindurch aus der dargestellten Betriebsposition in eine in Figur 3 dargestellte Ruheposition, insbesondere unterhalb des Bodenelementes 34, verlagerbar. Hierbei kann das Erntegut von der ersten Leitvorrichtung 42 und deren Leitelementen 46 unbeeinflusst in den Erntegutkanal 26 und/oder dem Förderrotor 28 gefördert werden.

Neben der ersten Leitvorrichtung 42 kann ergänzend oder alternativ eine zweite Leitvorrichtung 52 zwischen der Aufsammeltrommel 18 und dem Erntegutkanal 26 angeordnet sein. Die zweite Leitvorrichtung 52 ist ebenfalls zwischen einer Betriebsposition und einer Ruheposition verlagerbar ausgebildet. Die erste und/oder zweite Leitvorrichtung 42, 52 ist in der Betriebsposition und/oder Ruheposition ortsfest relativ zu der Aufnahmevorrichtung 16 angeordnet. Die in Figur 3 dargestellte zweite Leitvorrichtung 52 ist ebenfalls bodenseitig des Förderorgans und vor dem Erntegutkanal 26 angeordnet. Die zweite Leitvorrichtung 52 ist jedoch mittig, insbesondere symmetrisch, zu der Längsachse 44 angeordnet und ist entgegen der Förderrichtung des Erntegutes v-förmig ausgebildet. Die zweite Leitvorrichtung 52 weist ein paar zweite Leitelemente 54auf, welche jeweils unter einem Winkel zu der Längsachse 44 angeordnet sind und eine v-förmige zweite Leitvorrichtung 52 bilden. Die zweite Leitvorrichtung 52 kann benachbart zu der ersten Leitvorrichtung 42, insbesondere in Förderrichtung überlappungsfrei, angeordnet sein. Durch diese v-förmige Ausgestaltung der zweiten Leitvorrichtung 52 kann besonders bei einem schmalen Schwad, das mittig vor dem Erntegutkanal 26 aufgenommene Erntegut, zumindest teilweise in eine Richtung quer zur Längsachse 44 gefördert werden, wodurch bereits vor dem Erntegutkanal 26 eine gleichmäßigere Verteilung des Erntegutes bewirkt werden kann. Eine Förderung des Erntegutes unbeeinflusst durch die zweite Leitvorrichtung 52 kann durch eine Verlagerung der zweiten Leitvorrichtung 54 und insbesondere von den zweiten Leitelementen 54 aus der Betriebsposition in eine Ruheposition (Fig. 4) ermöglicht werden. In der Ruheposition sind die zweiten Leitelemente 54 im Wesentlichen vollständig durch das Bodenelement 34 zurückgezogen und im Wesentlichen unter diesem angeordnet.

Die erste Leitvorrichtung 42 und die zweite Leitvorrichtung 52 können unabhängig voneinander verlagerbar ausgebildet sein. Dies gilt besonders für die ersten und/oder zweiten Leitelemente 46, 54, welche jeweils unabhängig und/oder paarweise - je nach Leitvorrichtung - verlagerbar ausgestaltet sein können. Eine Verlagerung der ersten Leitvorrichtung 42 und/oder der zweiten Leitvorrichtung 52, und insbesondere von deren Leitelementen 46, 54, ist dabei in Abhängigkeit mindestens eines Betriebsparameters steuerbar, um jeweils den Betriebsbedingungen entsprechend eine optimale Verteilung des Erntegutes vordem Erntegutkanal 26 zu erreichen. Ein Betriebsparameter kann dabei beispielsweise die Art des Erntegutes, eine spezifische Eigenschaft des zu verarbeitenden Erntegutes, eine Fördergeschwindigkeit des Erntegutes in dem Erntegutkanal 26, eine Schwadgeometrie, und/oder eine Fahrgeschwindigkeit der Erntemaschine 10 sein, welche die Menge des aufgenommen Erntegutes beeinflusst.

Für eine verbesserte Verteilung des Erntegutes können die ersten und/oder zweiten Leitelemente 46, 54 jeweils einteilig oder mehrteilig ausgebildet sein. Hierbei können bei mehrteiligen Leitelementen 46, 54 einzelne Teile eines Leitelementes 46, 54 unabhängig voneinander verlagerbar ausgestaltet sein.

Das Bodenelement 34 kann zum Vermeiden einer Blockade der Aufnahmevorrichtung 16 bei stark schwankendem Erntegutfluss in vertikaler Richtung verlagerbar ausgebildet sein. Hierbei können die Leitvorrichtungen 42, 52 und/oder die Leitelemente 46, 54 mit dem Bodenelement zusammen verlagerbar angeordnet sein. Ebenfalls denkbar ist, dass die Leitvorrichtungen 42, 52, und/oder die Leitelemente 46, 54 bei einer Verlagerung des Bodenelementes 34 in ihrer Position verbleiben, wobei sich das Bodenelement 34 relativ zu den Leitvorrichtungen 42, 52 und/oder den Leitelementen 46, 54 verlagert.

### Bezugszeichenliste

- 10: Erntemaschine
- 12: Presskammer
- 14: Ballen
- 16: Aufnahmevorrichtung
- 18: Aufsammeltrommel
- 20: Zinken
- 22: Förderorgan
- 24: Drehachse
- 26: Erntegutkanal
- 28: Förderrotor
- 30: Rotorachse
- 32: Rotorelement
- 34: Bodenelement
- 36: Schneidvorrichtung
- 38: Gehäuse
- 40: Presswalzen
- 42: Erste Leitvorrichtung
- 44: Längsachse
- 46: Erstes Leitelement
- 48: Spalt
- 50: Rückwand
- 52: Zweite Leitvorrichtung
- 54: Zweites Leitelement

## Patentansprüche

1. Landwirtschaftliche Erntemaschine mit einer Aufnahmevorrichtung (16) für landwirtschaftliches Erntegut, wobei die Aufnahmevorrichtung (16) neben einer frontseitig angeordneten, antreibbaren Aufsammeltrommel (18) zum Aufnehmen von Erntegut mindestens ein antreibbares Förderorgan (22) zum Fördern von Erntegut zu einem Erntegutkanal (26), insbesondere einem Förderrotor (28) in dem Erntegutkanal (26), aufweist, wobei das Förderorgan (22) im Wesentlichen quer zu einer Längsachse (44) der Erntemaschine (10) angeordnet ist und zumindest das über die Breite der Aufnahmevorrichtung (16) aufnehmbare Erntegut im Wesentlichen mittig zu dem Erntegutkanal (26) zusammenführt, wobei zwischen der Aufsammeltrommel (18) und dem Erntegutkanal (26) mindestens eine erste Leitvorrichtung (42) vorgesehen ist, durch welche zumindest ein Teil des Erntegutes im Wesentlichen quer zu der Längsachse (44) und/oder in Richtung der Längsachse (44) der Erntemaschine (10) ablenkbar ist, **dadurch gekennzeichnet, dass** die Leitvorrichtung (42, 52) zwischen einer Betriebsposition und einer Ruheposition verlagerbar ist.

2. Erntemaschine nach Anspruch 1, **dadurch gekennzeichnet, dass** eine Verlagerung der Leitvorrichtung (42, 53) in Abhängigkeit von mindestens einem Betriebsparameter einstellbar ist.

3. Erntemaschine nach Anspruch 1 oder 2, **dadurch gekennzeichnet, dass** die mindestens eine Leitvorrichtung (42, 52), insbesondere an einem Bodenelement (34), in einem Wirkbereich des Förderorgans (22) angeordnet ist.

4. Erntemaschine nach einem der vorherigen Ansprüche, **dadurch gekennzeichnet, dass** eine Leitvorrichtung (42, 52) mindestens zwei Leitelemente (46, 54) aufweist, welche beiderseits symmetrisch zur Längsachse (44) der Erntemaschine (10) angeordnet sind.

5. Erntemaschine nach einem der vorherigen Ansprüche, **dadurch gekennzeichnet, dass** die erste Leitvorrichtung (42) mindestens zwei erste Leitelemente (46) aufweist, welche im Wesentlichen randseitig vordem Erntegutkanal (26) angeordnet sind.

6. Erntemaschine nach einem der vorherigen Ansprüche, **dadurch gekennzeichnet, dass** mindestens ein erstes Leitelement (46) derart beabstandet zu einer Rückwand (50) der Aufnahmevorrichtung (16) angeordnet ist, dass zwischen dem ersten Leitelement (46) und der Rückwand (50) ein Spalt (48) ausgebildet ist.

7. Erntemaschine nach einem der vorherigen Ansprüche, **dadurch gekennzeichnet, dass** eine zweite Leitvorrichtung (52) mit mindestens zwei zweiten Leitelementen (54) vorgesehen ist, wobei die zweite Leitvorrichtung (52) im Wesentlichen mittig der Aufnahmevorrichtung (16) angeordnet ist und die zweiten Leitelemente (54) v-förmig entgegen der Förderrichtung des Erntegutes angeordnet sind.

8. Erntemaschine nach einem der vorherigen Ansprüche, **dadurch gekennzeichnet, dass** ein Leitelement (46, 54) mehrteilig ausgebildet ist.

## Claims

1. Agricultural harvesting machine with a collection device (16) for agricultural crops, wherein the collection device (16) has, in addition to a drivable pick-up drum (18) arranged on the front side for collecting crops, at least one drivable conveyor (22) for conveying crops to a crop channel (26), in particular to a conveyor rotor (28) in the crop channel (26), wherein the conveyor (22) is arranged substantially transverse to a longitudinal axis (44) of the harvesting machine (10) and brings at least the crops that can be collected over the width of the collection device (16) together substantially in the centre of the crop channel (26), wherein provided between the pick-up drum (18) and the crop channel (26) there is at least one first guide device (42), by which at least some of the crops can be deflected substantially transverse to the longitudinal axis (44) and/or in the direction of the longitudinal axis (44) of the harvesting machine (10), **characterized in that** the guide device (42, 52) is displaceable between an operating position and an idle position.

2. Harvesting machine according to claim 1, **characterized in that** a displacement of the guide device (42, 52) is adjustable in dependence on at least one operating parameter.

3. Harvesting machine according to claim 1 or 2, **characterized in that** the at least one guide device (42, 52) is arranged, in particular on a base element (34), in an operating area of the conveyor (22).

4. Harvesting machine according to one of the preceding claims, **characterized in that** a guide device (42, 52) has at least two guide elements (46, 54), which are arranged on both sides of the harvesting machine (10) symmetrically relative to its longitudinal axis (44).

5. Harvesting machine according to one of the preceding claims, **characterized in that** the first guide device (42) has at least two first guide elements (46), which are arranged substantially on the edge side in front of the crop channel (26).

6. Harvesting machine according to one of the preceding claims, **characterized in that** at least one first guide element (46) is arranged spaced apart from a rear wall (50) of the collection device (16) in such a way that a gap (48) is formed between the first guide element (46) and the rear wall (50).

7. Harvesting machine according to one of the preceding claims, **characterized in that** a second guide device (52) is provided with at least two second guide elements (54), wherein the second guide device (52) is arranged substantially in the centre of the collection device (16) and the second guide elements (54) are arranged in a V-shape against the direction of conveyance of the crops.

8. Harvesting machine according to one of the preceding claims, **characterized in that** a guide element (46, 54) is formed in several parts.

## Revendications

1. Machine agricole de récolte comprenant un dispositif de ramassage (16) pour du produit agricole récolté, le dispositif de ramassage (16) comportant, en plus d'un tambour de ramassage disposé frontalement, entraînable (18) pour ramasser du produit récolté, au moins un organe d'amenée entraînable (22) pour amener du produit récolté à un canal de produit récolté (26), en particulier à un rotor d'amenée (28) dans le canal de produit récolté (26), l'organe d'amenée (22) étant disposé sensiblement transversalement à un axe longitudinal (44) de la machine de récolte (10) et rassemblant au moins le produit récolté, ramassable sur la largeur du dispositif de ramassage (16), sensiblement au centre du canal de produit récolté (26), entre le tambour de ramassage (18) et le canal de produit récolté (26) étant prévu au moins un premier dispositif directionnel (42) par l'intermédiaire duquel au moins une partie du produit récolté est déviable sensiblement transversalement à l'axe longitudinal (44) et/ou en direction de l'axe longitudinal (44) de la machine de récolte (10), **caractérisée en ce que** le dispositif directionnel (42, 52) est déplaçable entre une position de fonctionnement et une position de repos.

2. Machine de récolte selon la revendication 1, **caractérisée en ce qu'**un déplacement du dispositif directionnel (42, 52) est réglable en fonction d'au moins un paramètre de fonctionnement.

3. Machine de récolte selon la revendication 1 ou 2, **caractérisée en ce que** le au moins un dispositif directionnel (42, 52) est disposé, en particulier sur un élément de fond (34), dans une zone d'action de l'organe d'amenée (22).

4. Machine de récolte selon une des revendications précédentes, **caractérisée en ce qu'**un dispositif directionnel (42, 52) comporte au moins deux éléments directionnels (46, 54) qui sont disposés de chaque côté symétriquement à l'axe longitudinal (44) de la machine de récolte (10).

5. Machine de récolte selon une des revendications précédentes, **caractérisée en ce que** le premier dispositif directionnel (42) comporte au moins deux premiers éléments directionnels (46) qui sont disposés sensiblement sur le bord devant le canal de produit récolté (26).

6. Machine de récolte selon une des revendications précédentes, **caractérisée en ce qu'**au moins un premier élément directionnel (46) est distant d'une paroi arrière (50) du dispositif de ramassage (16), de façon à ménager un interstice (48) entre le premier élément directionnel (46) et la paroi arrière (50).

7. Machine de récolte selon une des revendications précédentes, **caractérisée en ce qu'**un second dispositif directionnel (52) est prévu avec au moins deux seconds éléments directionnels (54), le second dispositif directionnel (52) étant disposé sensiblement au centre du dispositif de ramassage (16) et les seconds éléments directionnels (54) étant disposés en forme de v à l'opposé de la direction d'amenée du produit récolté.

8. Machine de récolte selon une des revendications précédentes, **caractérisée en ce qu'**un élément directionnel (46, 54) est conçu en plusieurs parties.
